# EUROPEAN PATENT APPLICATION

(11) **EP 1 923 629 A2**
(43) Date of publication of application: **21.05.2008**
(21) Application number: 07425192.7
(22) Date of filing: 30.03.2007
(51) Int. Cl.: F22B 37/04, F22B 37/22, F16J 12/00

(54) **Storage tank for liquids, in particular a water storage tank on a boiler producing hot water for heating and/or sanitary purposes, and its relevant manufacturing method**

(30) Priority: 20.04.2006 IT BO20060298
(71) Applicant: Far s.r.l., 44047 Dosso (FE) (IT)
(72) Inventor: Alberghini, Gianluca, 44042 Cento (FE) (IT)
(74) Representative: Lanzoni, Alessandra

(57) **Abstract**

The tank (1) herein depicted is basically of a flattened shape, in particular of a prismatic shape with rounded edges and consistently quadrilateral in plan, it is formed by a pair of drawn half-shells (2), consisting of their respective monolithic bodies (4) of metal material, to be exact of metal plate, facing each other and coupled along their respective perimeter edges (5). These half-shells (2) are coupled to each other along their perimeter edges (5), which are welded or mechanically coupled, to be exact crimped or riveted, to each other, with or without the insertion of seals (6). Each half-shell (2) is drawn shaped so to present sections (7) concave on the inside and sections (9) convex on the inside and concave on the outside, carrying their respective inside profiles (10) that form a single element with the half-shells (2); these inside profiles (10) carried by the half-shells (2) interact and are coupled to form stiffening ribs (11), respectively, inside the tank (1) and to create a variety of communicating inside compartments (12). The tank in question is particularly suited as a sanitary water storage tank for boilers, since it enables to store a suitable quantity of water in tight spaces and its structure, further to being of compact size and able to withstand the standard working pressure of any water distribution systems, eases the stratification of liquids inside the tank.

## Description

This invention relates to a tank for liquids and its relevant manufacturing method.

Although the above tank may be employed in a variety of applications, it is particularly suited as a sanitary water storage tank for boilers, wall-mounted boilers in particular, for the production and/or preservation of hot water for heating and/or sanitary purposes. Consequently, this invention can also be applied to boilers provided with the afore mentioned tank, suitable for making maximum use of tight spaces and for the storage of sanitary hot water.

It is widely known that some types of wall-mounted boilers are provided with tanks for the storage of sanitary hot water. As a matter of fact, tanks are provided to boilers , commonly known as accumulation boilers, where a supply of hot water is produced, independently from the users' requirements, stored and maintained at the required temperature, always instantly available, as well as to some boilers, better known as instantaneous boilers, where hot water for sanitary purposes is produced on-call, that is at the users' request, however these are fitted with a tank of limited capacity for an instant supply of hot water in the starting transients.

As the tanks are connected to a water main, they are to be manufactured so to be able to withstand the pressure of this main, which is comparatively high ( approximately about 5÷10 bar). Consequently, most tanks presently available for wall-mounted boilers are mainly of cylindrical shape, with wall panels of substantial thickness, and require extensive welding, further to, very often, some other structure stiffening materials ( ribbing, spacers, etc) .

The tanks above are, therefore, rather bulky and not very versatile, as their shape and size limit their positioning inside a boiler, thus limiting other components arrangement; indeed, their production is rather complex and expensive.

Moreover, depending on determined specific requirements, tanks of different capacities may be required; in this case, to prevent over-sizing and weakening of the tank structure ( for these very reasons it would not be possible to realize a single tank of large size), it would be necessary to produce several tanks of limited size and connect them to each other, however this solution is rather inefficient, complex and not very versatile.

The purpose of the invention herein proposed is to provide a tank for liquids free of the disadvantages listed above; in particular, one of this invention purposes is to make available a tank specially suited to be used as a sanitary water storage tank of a boiler and/or for the production of hot water for heating and/or sanitary purposes.

Pursuant to the purposes above, this invention relates to a tank for liquids, in particular, to a water storage tank in a boiler used for the production of hot water for heating and/or sanitary purposes, characterized by its flattened shape and by being formed by a pair of drawn half-shells, consisting of their respective monolithic bodies of metal material facing each other and coupled to each other along their respective perimeter edges; these half-shells are drawn shaped so to present their respective interacting inside profiles, forming a single element with the half-shells, and coupled so to form stiffening ribs, respectively, inside the tank.

In accordance with another aspect of the invention herein described, this tank manufacturing method is disclosed; this method is comprising of the following steps: prearrange for a pair of monolithic bodies of metal material, to be exact, of metal plate; draw these bodies in order to shape them in concave/convex half-shells, respectively, with their respective perimeter edges and inside profiles forming a single element with the half-shells; couple the half-shells to each other along their respective perimeter edges, with the half-shells inside profiles interacting to form respective stiffening ribs inside the tank.

Therefore, the tank subject of this invention is of a shape and size suitable for installation on wall-mounted boilers, even of slight thickness, even though it holds a comparatively high capacity, and, above all, is of high resistance, enough to withstand comparatively high pressures, such as the ones usually found in a water mains ( approximately up to about 7 bar, but it may withstand even higher ones) with no permanent deformations; this tank achieves the above performance with no special construction materials, such as the use of spacers or the insertion of stiffening ribs; as a matter of fact, the manufacturing method is rather simple, quick and comparatively inexpensive; moreover, it is possible to create or modulate the number of compartments inside the tank depending on its required capacity (and, consequently, select the number of compartments based on each single specific case) .

This invention is further described in the non-limiting execution examples that follow, where:
- figure 1 is a perspective overall view of the tank herein described;
- figure 2 is a perspective view of a component of the tank in figure 1, prior to assembly;
- figure 3 is a view of figure 1 section A-A ;
- figures 4 and 5 are views of figure 1 section B-B, based on two different types of execution;
- figure 6 depicts a boiler fitted with the tank herein described.

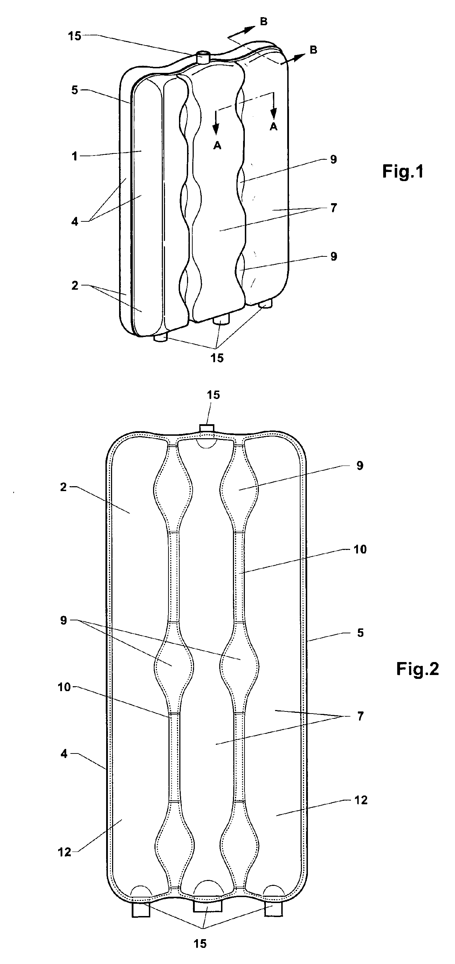

Tank 1 herein depicted in figure 1 is basically of a flattened shape, in particular of a consistent prismatic shape with rounded edges and consistently quadrilateral in plan.

With reference to figures 2-5, this tank 1 is formed by a pair of drawn half-shells 2, consisting of their respective monolithic bodies 4 of metal material, to be exact of metal plate, facing each other and coupled along their respective perimeter edges 5.

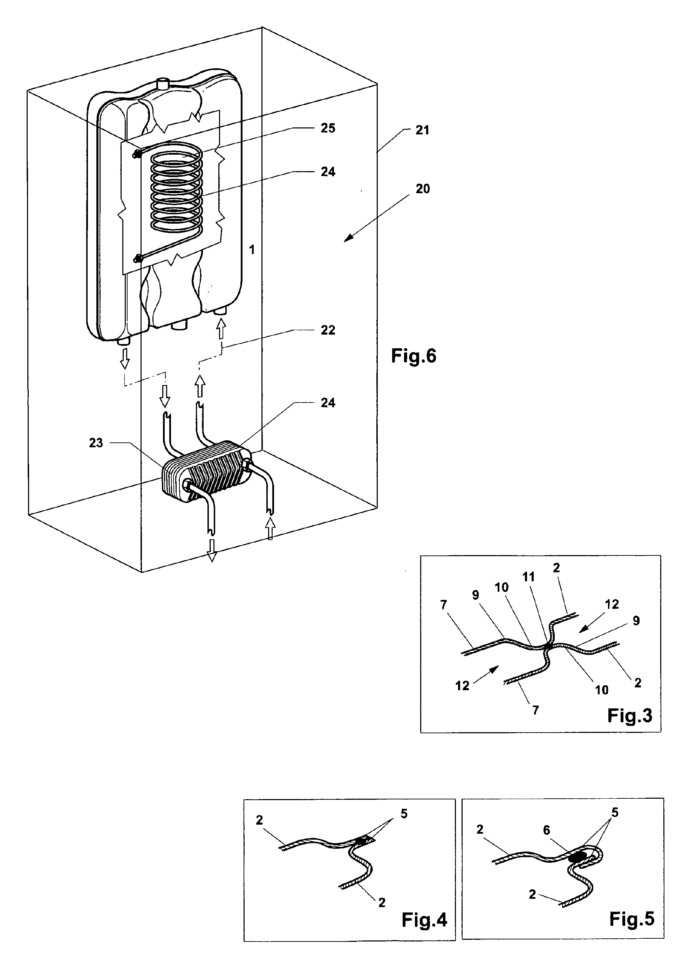

These half-shells 2 are coupled to each other along their respective perimeter edges 5, which are welded ( as schematically depicted in figure 4) or mechanically coupled, to be exact crimped or riveted ( as depicted in figure 5), to each other, with or without the insertion of seals 6 .

Each half-shell 2 is drawn shaped so to present concave inside sections 7 and convex inside sections 9 , which are concave on the outside, carrying their respective inside profiles 10 that form a single element with the half-shells 2; these inside profiles 10 carried by the half-shells 2 interact and are coupled to form stiffening ribs 11 , respectively, (figure 3) inside the tank 1 and to define a variety of communicating inside compartments 12; the opposite inside profiles 10 carried by the half-shells 2 may be coupled by spot-welding, with no weld material, or mechanically joined (Figure 3). Moreover, said half-shells 2 are shaped so that the communicating compartments 12 configuration eases the stratification of the liquid inside tank 1.

This tank 1 is furthermore provided with a variety of couplings 15 for any related water pipe (common and not depicted); these couplings 15 connection to the water pipes may be of any common type (threaded, bayonet, etc).

In figure 6 a boiler 20 is depicted, to be exact a wall-mounted boiler for the production of hot water for heating and/or sanitary purposes; this boiler 20 is commonly known, and, generally speaking, it includes (further to other different components, commonly known and not herein depicted) a casing 21, a primary circuit 22 for sanitary hot water (partially depicted) where water drawn from an external water main circulates, at least one heat exchanger 23 positioned along circuit 22 to transfer heat from a heating fluid to the water; furthermore, this boiler 20 is provided with a tank 1 associated to a heating element 24; this heating element 24 may be, for example, the very same circuit 22, and/or the above described heat exchanger 23, and/or one, or several, further heat exchangers 25 (for example, a coil) housed inside tank 1.

Therefore, generally speaking, tank 1 is associated to a heating element, such as, for example, a sanitary hot water primary circuit, a heat exchanger, or an electrical resistance, installed outside the tank and hydraulically connected to the tank, or housed inside it .

Tank 1 is manufactured in accordance with another aspect of this invention, with the following method.

A pair of monolithic bodies 4, basically flat, of metal material, to be exact of metal plate, are prearranged, and suitably cut into the relevant shape and size ; then, these bodies 4 are drawn shaped to create the concave/convex half-shells 2 with their respective perimeter edges 5 and inside profiles 10, forming a single element with said half-shells 2. The drawing step is carried out by a single plastic deformation operation on each of the bodies 4 by means of a mechanical press, where the bodies 4 are shaped so that the half-shells 2 125 present sections 7 concave on the inside, and sections 9 convex on the inside and concave on the outside, carrying inside profiles 10. During this drawing step, the bodies are shaped so that at least one of the half-shells 2 presents couplings 15. The half-shells 2 are sized and drawn so to present a preset number of inside compartments 12 , which are selected depending on the capacity of the tank to be manufactured.

Consequently, said half-shells 2 are coupled to each other along their respective perimeter edges 5, with the half-shells 2 inside profiles 10 interacting to form stiffening ribs 11 inside tank 1. In particular, these half-shells 2 are coupled to each other by means of welding along their edges 5, or are mechanically joined to each other, for example crimped or riveted, with or without the insertion of seals 6. Once the half-shells 2 are coupled, their inside profiles 10 interact and create compartments 12 formed by the concave inside sections 7 of the half-shells 2, consequently tank 1 presents its flattened shape, consistently prismatic, with rounded edges.

Then, tank 1 is provided with a heating element 24; naturally, when this heating element 24 is housed inside tank 1, it is to be suitably set in the half-shells 2 prior to the above coupling operation .

Finally, it is understood that changes in the size or manufacturing method as described in this application, while remaining within the scope of the claims, may be resorted to without departing from the spirit of the invention.

## Claims

1. Tank (1) for liquids, in particular a water storage tank in boilers for the production of hot water for heating and/or sanitary purposes, this tank (1) is **characterized by** its flattened shape, and by being formed by a pair of drawn half-shells (2), consisting of their respective monolithic bodies (4) of metal material opposite each other, and coupled to each other along their respective perimeter edges (5); these half-shells are drawn shaped so to present their respective interacting inside profiles (10), forming a single element with the half-shells (2) and coupled so to form stiffening ribs (11), respectively, inside this tank (1).

2. Tank, according to claim 1, **characterized by** the fact that the half-shells (2) are coupled to each other along their respective perimeter edges (5), and said edges (5) are welded or mechanically joined, for example crimped or riveted, to each other.

3. Tank according to claim 2, **characterized by** the fact that said edges (5) are crimped or riveted to each other with or without the insertion of seals (6).

4. Tank, according to one of the claims above, **characterized by** the fact that said inside profiles (10) of both half-shells (2) are coupled to create a variety of inside compartments (12) .

5. Tank, according to claim 4, **characterized by** the fact that said inside profiles (10) are joined by spot-welding with no weld material.

6. Tank, according to claims 4 or 5, **characterized by** the fact that said inside compartments (12) are communicating compartments.

7. Tank, according to one of the claims above, **characterized by** the fact that said half-shells (2) present sections (7) concave on the inside, creating compartments (12) inside this tank, and sections (9) convex on the inside and concave on the outside, carrying said inside profiles (10).

8. Tank, according to claim 7, **characterized by** the fact that said half-shells (2) are shaped so to create communicating inside compartments (12) which configuration eases the stratification of the liquid inside the tank.

9. Tank, according to one of the claims above, **characterized by** the fact that it is of a consistently prismatic shape with rounded edges.

10. Tank, according to one of the claims above, **characterized by** the fact that it is provided with a variety of couplings (15) for the relevant water pipes.

11. Tank, according to one of the claims above, **characterized by** the fact that it is associated to a heating element (24), for example a sanitary hot water primary circuit, a heat exchanger, or an electrical resistance, installed outside the tank and hydraulically connected to it, or housed inside this tank.

12. Boiler (20), in particular a wall-mounted boiler, for the production of hot water for heating and/or sanitary purposes, comprising a circuit (22) inside which water drawn from an external water main circulates , at least one heat exchanger (23) installed along the circuit in order to transfer heat from a heating fluid to the water, and at least one water storage tank (1) connected to said circuit; the above boiler is **characterized by** the fact that its water storage tank (1) is a tank in accordance with one of the claims above.

13. Tank manufacturing method, according to one of the claims above, **characterized by** the fact that it is comprising of these steps:
prearranging for a pair of monolithic bodies of metal material, to be exact, of metal plate; drawing these bodies in order to shape them in concave/convex half-shells, respectively, with their respective perimeter edges and inside profiles forming a single element with the half-shells; coupling of these half-shells to each other along said respective perimeter edges, with the two half-shells inside profiles interacting to form respective stiffening ribs inside the tank.

14. Method, according to claim 13, **characterized by** the fact that the drawing step is carried out by means of a single plastic deformation operation on each of said bodies with a mechanical press.

15. Method, according to claims 13 or 14, **characterized by** the fact that said half-shells are welded or mechanically joined to each other, for example, crimped or riveted.

16. Method, according to one of the claims from 13 to 15, **characterized by** the fact that said edges are crimped or riveted to each other with or without the insertion of seals.

17. Method, according to one the claims from 13 to 16, **characterized by** the fact that, during the drawing step, said bodies are shaped so that the half-shells present inside profiles forming, once coupled, a variety of compartments inside the tank.

18. Method, according to claim 17, **characterized by** the fact that said inside profiles (10) are coupled by means of spot-welding with no weld material.

19. Method, according to claim 18, **characterized by** the fact that said inside compartments are communicating compartments.

20. Method, according to one of the claims from 13 to 19, **characterized by** the fact that during the drawing step said bodies are shaped so that the half-shells present sections concave on the inside, creating compartments inside the tank, and sections convex on the inside and concave on the outside, carrying said inside profiles.

21. Method, according to claim 20, **characterized by** the fact that during the drawing step said bodies are shaped so that the half-shells present communicating inside compartments which configuration eases the stratification of the liquid inside the tank.

22. Method, according to one of the claims from 13 to 21, **characterized by** the fact during the drawing step said bodies are shaped so that the tank, once both half-shells have been coupled, is of a consistent prismatic shape with rounded edges.

23. Method, according to one of the claims from 13 to 22, **characterized by** the fact that during the drawing step said bodies are shaped so that at least one of the half-shells presents a variety of couplings for the relevant water pipes.

24. Method, according to one of the claims from 13 to 23, **characterized by** the fact that a heating element is associated to the tank, for example, a primary circuit of sanitary hot water, a heat exchanger, or an electrical resistance, installed outside the tank and hydraulically connected to said tank, or housed inside the tank .

25. Method, according to one of the claims from 13 to 24, **characterized by** the fact that said half-shells are sized and drawn so to present a predetermined number of inside compartments, selected depending on the capacity of the tank.
